Europäisches Patentamt

European Patent Office

Office européen des brevets

(19)

(11) **EP 0 655 554 B1**

(12) **FASCICULE DE BREVET EUROPEEN**

(45) Date de publication et mention
de la délivrance du brevet:
**26.08.1998 Bulletin 1998/35**

(51) Int Cl.⁶: **F02P 5/15**, F16F 15/00,
B60K 41/06

(21) Numéro de dépôt: **94402705.1**

(22) Date de dépôt: **25.11.1994**

(54) **Procédé de correction des à-coups de couple d'un moteur à combustion interne**

Verfahren zur Korrektur von Drehmomentstössen einer inneren Brennkraftmaschine

Method of correction of torque jerks of an internal combustion engine

(84) Etats contractants désignés:
**BE DE ES GB IT**

(30) Priorité: **30.11.1993 FR 9314293**

(43) Date de publication de la demande:
**31.05.1995 Bulletin 1995/22**

(73) Titulaire: **RENAULT**
**92109 Boulogne-Billancourt (FR)**

(72) Inventeurs:
- **Taupin, Jean-Marie**
  **F-92140 Clamart (FR)**
- **Marchand, Richard**
  **F-91510 Lardy (FR)**
- **Paillisse, Rémi**
  **F-75013 Paris (FR)**

(56) Documents cités:
EP-A- 0 109 545     EP-A- 0 163 953
EP-A- 0 233 449     DE-A- 4 009 792
GB-A- 2 253 440

## Description

La présente invention concerne un procédé de correction des paramètres de contrôle d'un moteur à combustion interne à injection électronique équipant un véhicule automobile pour éliminer les éventuels phénomènes d'à-coups de couple pouvant survenir lors de conditions particulières de fonctionnement du véhicule comme décrite dans le préambule de la revendication 1.

Il est connu que dans certaines conditions de fonctionnement d'un véhicule automobile équipé d'un moteur à combustion interne, notamment en régimes transitoires (accélérations vives, etc.), on observe des phénomènes d'oscillations du couple transmis aux roues du véhicule encore appelées à-coups, ces à-coups affectent alors le confort des passagers du véhicule.

Ces oscillations ont pour origine la chaîne cinématique liant le moteur à l'interface pneu/sol. En effet, l'énergie mécanique en bout de vilebrequin est transmise aux roues par un système de transmission comprenant traditionnellement un embrayage, une boîte de vitesses et un différentiel, qui possède un amortissement et une rigidité propre. Il en résulte donc, que toute variation brusque du couple moteur au niveau du vilebrequin est répercutée aux roues avec des oscillations dont l'importance va dépendre des caractéristiques du système de transmission.

Pour remédier à ces oscillations de couples, de nombreuses méthodes ont été élaborées. Il est ainsi connu dans l'art antérieur, notamment par les documents EP-A-461504 et WO-A-90/06441, de réguler le couple d'un moteur de façon à réduire ou supprimer la perception des oscillations de couple, par le conducteur du véhicule. Pour ce faire, les paramètres de contrôle des moteurs du type à injection électronique, à savoir le temps d'injection ou l'avance à l'allumage sont ajustés pour éliminer les oscillations en effectuant la surveillance du couple moteur aux roues et en corrigeant dans la boucle de commande la valeur du ou des paramètres de contrôle choisis en fonction de l'amplitude des oscillations détectées.

Le document DE-A-4009792 décrit notamment un procédé de correction des à-coups de couple.

Ce procédé qui est du type par lequel au moins un paramètre de contrôle est corrigé en réponse aux oscillations du couple moteur, comprend les étapes suivantes :

- estimation de la valeur instantanée des oscillations du couple moteur par filtrage du régime de rotation de l'arbre moteur ;
- détermination de la correction à appliquer au paramètre de contrôle par application d'un gain multiplicatif variable à la valeur instantanée des oscillations du couple.

De telles méthodes présentent toutefois certains inconvénients, et notamment une grande complexité dans la relation liant la variation du couple et la correction à apporter au (ou aux) paramètres de contrôle choisis, ce qui nécessite d'utiliser des calculateurs de contrôle moteur de fortes capacités.

Le but de la présente invention est donc de proposer un procédé de correction des paramètres de contrôle d'un moteur à combustion interne à injection électronique pour éliminer les à-coups de couple qui pallie les inconvénients de l'art antérieur en étant particulièrement simple à mettre en oeuvre.

Le procédé selon l'invention de correction des à-coups de couple concerne plus particulièrement un moteur à combustion interne à injection de carburant comportant un système électronique de contrôle moteur déterminant d'après des stratégies prédéterminées et à partir des valeurs prises par les paramètres caractéristiques du fonctionnement moteur, les valeurs des paramètres de contrôle qui commandent le fonctionnement du moteur.

Selon l'invention le procédé de correction des à-coups de couple est caractérisé en ce que, l'étape d'estimation de la valeur instantanée des oscillations du couple moteur comporte les opérations suivantes :

- calcul d'un régime moyen de rotation par filtrage du régime de rotation instantané ;
- calcul de la différence entre le régime de rotation instantané et le régime moyen de rotation ;
- calcul de la différence moyenne entre le régime de rotation instantané et le régime moyen de rotation par filtrage de la différence entre le régime de rotation instantané et le régime moyen de rotation ;
- calcul de la différence entre d'une part, la différence moyenne entre le régime de rotation instantané et le régime moyen de rotation et d'autre part, la différence entre le régime de rotation instantané et le régime moyen de rotation.

Selon une autre caractéristique du procédé de correction des à-coups de couple objet de l'invention, les filtrages opérés sont réalisés par des filtres du type passe-bas du premier ordre, de gain unitaire et de constante de temps variable.

Selon une autre caractéristique du procédé de correction des à-coups de couple objet de l'invention, la constante de temps des filtres est ajustée en fonction des valeurs prises par au moins un paramètre caractéristique du fonctionnement moteur.

Selon une autre caractéristique du procédé de correction des à-coups de couple objet de l'invention, la valeur du gain est ajustée en fonction des valeurs prises par au moins un paramètre caractéristique du fonctionnement moteur.

Selon une autre caractéristique du procédé de correction des à-coups de couple objet de l'invention, le paramètre de contrôle corrigé en réponse aux oscillations du couple moteur est l'avance à l'allumage.

On comprendra mieux les buts, aspects et avantages de la présente invention, d'après la description donnée ci-après d'un mode de réalisation de l'invention appliqué à un moteur quatre temps à allumage commandé, ce mode de réalisation étant donné à titre d'exemple non limitatif, en se référant au dessin annexé, dans lequel :

la figure 1 est un schéma structurel en coupe partielle du moteur et de son dispositif de contrôle moteur intégrant le procédé objet de la présente invention ;

la figure 2 est un bloc diagramme détaillant les différentes étapes du procédé objet de l'invention.

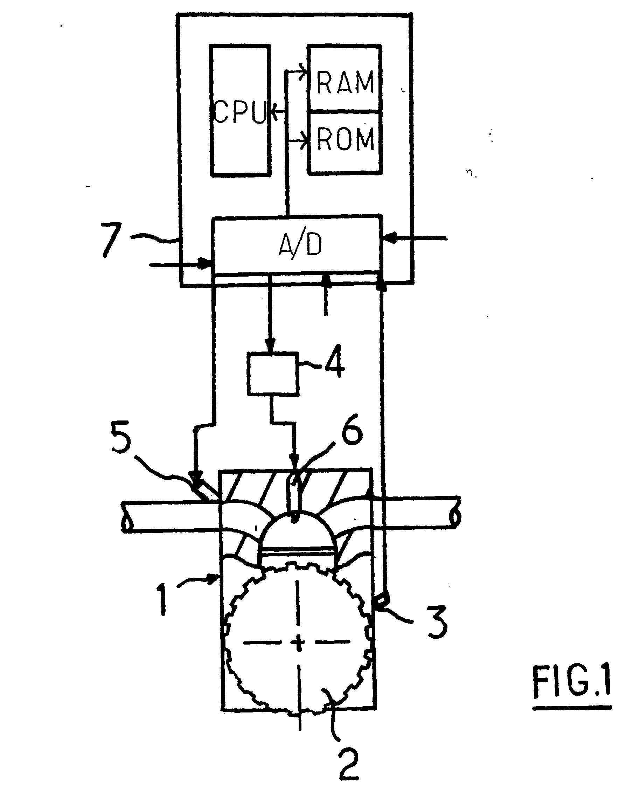

La figure 1 précise la configuration d'un système de contrôle moteur mettant en oeuvre le procédé de correction des à-coups de couple selon la présente invention. Seules les parties constitutives nécessaires à la compréhension de l'invention ont été figurées.

Le moteur à combustion interne du type quatre temps, à allumage commandé et à cylindres en ligne, référencé 1, est équipé d'un dispositif d'injection multipoint par lequel chaque cylindre est alimenté en carburant par un électro-injecteur 5 spécifique. L'ouverture de chaque électro-injecteur 5 est commandée par un système électronique de contrôle moteur 7, qui détermine la quantité de carburant injectée ou la durée d'injection Ti dans un système d'injection du type pression-temps, ainsi que le phasage de l'injection dans le cycle suivant les conditions de fonctionnement du moteur.

Le système de contrôle moteur 7 commande également l'instant d'allumage de chaque bougie 6 par l'intermédiaire du module de puissance d'allumage 4 qui contrôle le fonctionnement de la bobine, la haute tension étant ensuite envoyée à chaque bougie 6 par l'intermédiaire d'un distributeur non figuré. Classiquement l'allumage d'une bougie est commandé avant que le piston arrive au Point Mort Haut explosion. Cette avance Av, qui peut évoluer de quelques degrés à plusieurs dizaine de degrés vilebrequin, est déterminée par le système de contrôle moteur suivant les conditions de fonctionnement du moteur.

Le système de contrôle moteur 7 comprend classiquement un calculateur comportant une CPU, une mémoire vive (RAM), une mémoire morte (ROM), des convertisseurs analogiques-numériques (A/D), et différentes interfaces d'entrées et de sorties. Ce système de contrôle moteur reçoit des signaux d'entrée, effectue des opérations et génère des signaux de sortie à destination notamment des injecteurs 5 et du module de puissance d'allumage 4.

Parmi les signaux d'entrée, figurent notamment ceux émis par un capteur vilebrequin 3 pour permettre de synchroniser les instants d'injection et d'allumage avec le fonctionnement du moteur.

Ce capteur 3, du type par exemple à réluctance variable, qui est monté fixe sur le bâti du moteur, est associé à une couronne de mesure 2, solidaire du volant d'inertie et qui comporte un certain nombre de repères ou dents. Le capteur 3 permet de délivrer un signal représentatif du défilement des dents portées par la couronne et plus particulièrement de la vitesse de défilement de ces dents, c'est-à-dire représentative de la vitesse instantanée de rotation du volant encore appelée régime instantané de rotation du moteur et désigné par le symbole N. La valeur du régime de rotation N est utilisée pour déterminer le calcul du temps d'injection et l'instant d'allumage selon des stratégies prédéterminées.

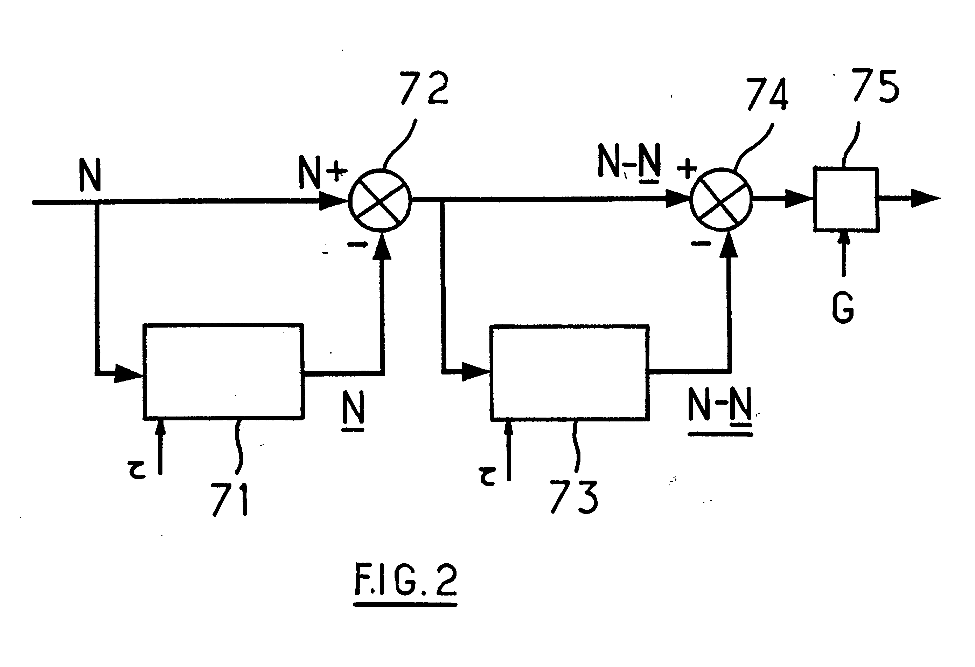

La figure 2, décrit un schéma de principe du procédé de correction des à-coups de couple selon l'invention dans lequel le paramètre de contrôle du moteur est l'avance à l'allumage Av. La commande de ce paramètre de contrôle est déterminée par une boucle de régulation appliquée en permanence sur la valeur de l'avance, qui permet d'éliminer les oscillations du couple moteur.

Cette boucle de régulation est obtenue simplement grâce à deux filtrages successifs appliqués à la mesure du régime de rotation instantané N du moteur.

Un premier filtre passe-bas 71 du premier ordre, de la forme $1 / (1 + t)$ de gain unitaire et de constante de temps variable t, permet de déterminer un régime moyen $\underline{N}$. La valeur de la constante de temps t est ajustée en fonction du régime N et du rapport Rp de boîte de vitesses engagé (ce rapport est soit obtenu directement par des capteurs adaptés soit déduit à partir du régime de rotation du moteur et de la vitesse du véhicule obtenu par ailleurs). Bien évidemment, il est possible d'ajuster cette constante de temps t en fonction des valeurs prises par d'autres paramètres caractéristiques du fonctionnement moteur.

Pour toute nouvelle valeur du régime Nn obtenue lors de la nième rotation du vilebrequin, la valeur statistique $\underline{Nn}$ est donc déterminée à partir de la valeur statistique calculée précédemment $\underline{Nn\text{-}1}$, à partir de la formule de récurrence suivante :

$$\underline{Nn} = \underline{Nn\text{-}1} + ((Nn - \underline{Nn\text{-}1}) / tn)$$

Le régime moyen $\underline{N}$ étant calculé, on calcule alors la différence entre le régime instantané N et le régime moyen $\underline{N}$ grâce à un différentiateur 72 pour obtenir un pseudo couple instantané N-$\underline{N}$. Ce pseudo couple instantané N-$\underline{N}$ est ensuite traité par un nouveau filtre 73 du type passe-bas du premier ordre identique au filtre 71, c'est-à-dire de gain unitaire et de même constante de temps variable t. Il est toutefois envisageable d'utiliser pour ce second filtrage une constante de temps distincte de la constante de temps du premier filtrage.

Ce deuxième filtrage permet de déterminer un pseudo couple moyen $\underline{N\text{-}} \underline{N}$. La formule de récurrence permettant de calculer à chaque tour de vilebrequin la valeur du pseudo couple moyen, est identique à celle donnant le régime moyen en fonction du régime instantané.

On calcule ensuite la différence entre le pseudo couple N-$\underline{N}$ et le pseudo couple moyen $\underline{N}$-$\underline{N}$ grâce à un second différentiateur 74. Cette différence permet d'obtenir une estimation instantanée des oscillations du couple moteur. La connaissance de cette valeur permet de modifier en réponse les paramètres de contrôle moteur afin d'engendrer une contre-réaction qui génère des oscillations en opposition de phase aux précédentes et qui en se superposant à ces dernières a pour effet de supprimer les oscillations et donc les à-coups de couple moteur.

Dans l'exemple représenté, les corrections portent sur l'avance à l'allumage Av, il est aussi possible d'opérer la correction sur le temps d'injection et/ou le phasage de l'injection notamment dans le cas d'un véhicule à allumage par compression.

On en déduit la correction à apporter à l'avance à l'allumage CorrAv en multipliant la différence ainsi obtenue par un gain pur variable G grâce à un multiplicateur 75.

On a ainsi :

$$\text{CorrAv} = G * ((N\text{-}\underline{N}) - (\underline{N}\text{-}\underline{N}))$$

La valeur du gain G est en permanence ajustée en fonction du régime moteur N, de la pression des gaz dans le collecteur d'admission Pcoll, et du rapport Rp de boîte de vitesses engagé. Bien évidemment, il est également possible d'ajuster ce gain G en fonction des valeurs prises par d'autres paramètres caractéristiques du fonctionnement moteur.

Les valeurs de la constante de temps t des filtres 71 et 73 et du gain G sont obtenus expérimentalement pour un moteur donné par mesure au banc d'essai. Ces valeurs sont stockées dans les mémoires correspondantes du système de contrôle moteur 7 sous la forme classique de tables ou de cartographies.

La valeur de l'avance à l'allumage réellement appliquée est donc la valeur de l'avance à l'allumage AV obtenue classiquement en fonction des conditions de fonctionnement du moteur (régime, charge, etc.) à laquelle vient donc s'ajouter la valeur de la correction algébrique CorrAv obtenue selon le procédé exposé ci-dessus.

Ainsi conformément au procédé selon l'invention, il est possible de réguler la valeur du couple moteur en adaptant en permanence la valeur de l'avance à l'allumage, ce qui permet d'éliminer les éventuelles oscillations de couple quelle que soit la plage de fonctionnement du moteur. Le procédé permet donc de supprimer toute perception d'à-coups de couple au(x) passager(s) sans toutefois diminuer les performances du véhicule.

La grande simplicité du procédé développé permet son implantation même sur des calculateurs de capacité limitée. De plus, le faible nombre de valeurs à calibrer t et G permet de réduire le temps de mise au point d'un véhicule au strict minimum.

Bien entendu, l'invention n'est nullement limitée au mode de réalisation décrit et illustré qui n'a été donné qu'à titre d'exemple.

Au contraire, l'invention comprend tous les équivalents techniques des moyens décrits ainsi que leurs combinaisons si celles-ci sont effectuées suivant son esprit.

Ainsi il est possible d'utiliser la présente invention non seulement dans le cas d'un système d'allumage classique distribué mais également dans le cas d'un allumage semi-statique ou statique.

Ainsi le système de correction des à-coups de couple par correction de l'avance à l'allumage, peut être réalisé sous diverses formes :

- soit avec des composants d'électronique analogique pour lesquels les différentiateurs, multiplicateur et autres filtres sont réalisés à l'aide d'amplificateurs opérationnels ;

- soit avec des composants d'électronique numérique qui réaliseraient la fonction en logique câblée ;

- soit par un algorithme de traitement du signal implanté sous forme d'un module logiciel composant d'un système logiciel de contrôle moteur faisant fonctionner le microcontrôleur d'un calculateur électronique.

- soit encore, par une puce spécifique (custom) dont les ressources matériel et logiciel auront été optimisées pour réaliser les fonctions objet de l'invention : puce microprogrammable ou non, encapsulée séparément ou bien tout ou partie d'un coprocesseur implanté dans un microcontrôleur ou microprocesseur etc.

**Revendications**

1. Procédé de correction des à-coups de couple d'un moteur à combustion interne (1) à injection de carburant du type comportant un système électronique de contrôle moteur (7) déterminant d'après des stratégies prédéterminées et à partir des valeurs prises par les paramètres caractéristiques (N,Pcoll, Rp) du fonctionnement moteur (1), les valeurs des paramètres de contrôle (Av,Ti) qui commandent le fonctionnement du moteur, par lequel au moins un paramètre de contrôle (Av) est corrigé en réponse aux oscillations du couple moteur, en utilisant les étapes suivantes :

- estimation de la valeur instantanée des oscillations du couple moteur par filtrage du régime de rotation (N) de l'arbre moteur ;
- détermination de la correction (CorrAv) à appliquer audit paramètre de contrôle (Av) par application d'un gain multiplicatif variable (G) à ladite valeur instantanée des oscillations du couple,

caractérisé en ce que l'étape d'estimation de la valeur instantanée des oscillations du couple moteur comporte les opérations suivantes :

- calcul d'un régime moyen de rotation ($\underline{N}$) par filtrage du régime de rotation instantané (N) ;
- calcul de la différence entre le régime de rotation instantané (N) et le régime moyen de rotation ($\underline{N}$) ;
- calcul de la différence moyenne ($\underline{N-\underline{N}}$) entre le régime de rotation instantané (N) et le régime moyen de rotation ($\underline{N}$) par filtrage de la différence (N-$\underline{N}$) entre le régime de rotation instantané (N) et le régime moyen de rotation ($\underline{N}$);
- calcul de la différence entre d'une part, la différence moyenne ($\underline{N-\underline{N}}$) entre le régime de rotation instantané (N) et le régime moyen de rotation ($\underline{N}$) et d'autre part, la différence (N-$\underline{N}$) entre le régime de rotation instantané (N) et le régime moyen de rotation ($\underline{N}$).

2. Procédé de correction des à-coups de couple selon la revendication 1, caractérisé en ce que les filtrages opérés sont réalisés par des filtres (71,73) du type passe-bas du premier ordre, de gain unitaire et de constante de temps variable (t).

3. Procédé de correction des à-coups de couple selon la revendication 2, caractérisé en ce que la constante de temps (t) desdits filtres (71,73) est ajustée en fonction des valeurs prises par au moins un paramètre caractéristique (N,Rp) du fonctionnement moteur (1).

4. Procédé de correction des à-coups de couple selon l'une quelconque des revendications 1 à 3, caractérisé en ce que la valeur dudit gain (G) est ajustée en fonction des valeurs prises par au moins un paramètre caractéristique (N,Rp,Pcoll) du fonctionnement moteur (1).

5. Procédé de correction des à-coups de couple selon l'une quelconque des revendications 1 à 4, caractérisé en ce que ledit paramètre de contrôle corrigé en réponse aux oscillations du couple moteur est l'avance à l'allumage (Av).

**Patentansprüche**

1. Verfahren zur Korrektur von Stößen des Drehmoments eines Verbrennungsmotors (1) mit Kraftstoffeinspritzung von dem Typ, der mit einem elektronischen System zur Motorsteuerung (7) versehen ist, das nach festgelegten Strategien und ausgehend von den Werten, die die charakteristischen Parameter (N, Pcoll, Rp) des Betriebs des Motors (1) annehmen, die Werte der Steuerparameter (Av, Ti) bestimmt, die den Betrieb des Motors steuern, wobei zumindest ein Steuerparameter (Av) als Antwort auf die Schwingungen des Motordrehmoments korrigiert wird, indem die folgenden Schritte ausgeführt werden:

- Schätzung des momentanen Werts der Schwingungen des Motordrehmoments durch Filtern der Drehzahl (N) der Antriebswelle;
- Bestimmung der Korrektur (CorrAv), die an dem genannten Steuerparameter (Av) anzubringen ist, indem ein variabler multiplikativer Verstärkungsfaktor (G) auf den genannten momentanen Wert der Schwingungen des Drehmoments angewendet wird,

dadurch gekennzeichnet, daß der Schritt der Schätzung des momentanen Werts der Schwingungen des Motordrehmoments die folgenden Operationen umfaßt:

- Berechnung einer mittleren Drehzahl ($\underline{N}$) durch Filtern der momentanen Drehzahl (N);
- Berechnung der Differenz zwischen der momentanen Drehzahl (N) und der mittleren Drehzahl ($\underline{N}$);
- Berechnung der mittleren Differenz ($\underline{N - \underline{N}}$) zwischen der momentanen Drehzahl (N) und der mittleren Drehzahl ($\underline{N}$) durch Filtern der Differenz (N - $\underline{N}$) zwischen der momentanen Drehzahl (N) und der mittleren Drehzahl ($\underline{N}$);
- Berechnung der Differenz zwischen einerseits der mittleren Differenz ($\underline{N -\underline{N}}$) zwischen der momentanen Drehzahl (N) und der mittleren Drehzahl ($\underline{N}$) und andererseits der Differenz (N - $\underline{N}$) zwischen der momentanen Drehzahl (N) und der mittleren Drehzahl ($\underline{N}$).

2. Verfahren zur Korrektur von Stößen des Drehmoments nach Anspruch 1, dadurch gekennzeichnet, daß die durchgeführten Filterungen durch Tiefpaßfilter (71, 73) erster Ordnung mit unitarem Verstärkungsfaktor und variabler Zeitkonstante (t) ausgeführt werden.

3. Verfahren zur Korrektur von Stößen des Drehmoments nach Anspruch 2, dadurch gekennzeichnet, daß die Zeitkonstante (t) der genannten Filter (71, 73) in Abhängigkeit von den Werten eingestellt wird, die zumindest ein charakteristischer Parameter (N, Rp) des Betriebs des Motors (1) annimmt.

4. Verfahren zur Korrektur von Stößen des Drehmoments nach einem der Ansprüche 1 bis 3, dadurch gekennzeichnet, daß der Wert des genannten Verstärkungsfaktors (G) in Abhängigkeit von den Werten eingestellt wird, die zumindest ein charakteristischer Parameter (N, Rp, Pcoll) des Betriebs des Motors (1) annimmt.

5. Verfahren zur Korrektur von Stößen des Drehmoments nach einem der Ansprüche 1 bis 4, dadurch gekennzeichnet, daß der genannte Steuerparameter, der als Antwort auf die Schwingungen des Motordrehmoments korrigiert wird, die Zündvorverstellung (Av) ist.

**Claims**

1. A method for correcting torque bumping of a fuel injection internal combustion engine (1) of the type comprising an electronic engine control system (7) determining, on the basis of predetermined strategies and from values assumed by the characteristic parameters (N, Pcoll, Rp) of the operation of the engine (1), the values of the control parameters (Av, Ti) which control the operation of the engine, by means of which at least one control parameter (Av) is corrected in response to the oscillations of the engine torque, comprising the following stages:

   - estimation of the instantaneous value of the oscillations of the engine torque by filtering of the speed of rotation (N) of the engine shaft,
   - determination of the correction (CorrAv) to be applied to the control parameter (Av) by applying a variable multiplier gain (G) to this instantaneous value of the torque oscillations,

   characterised in that the stage of estimation of the instantaneous value of the engine torque oscillations comprises the following operations:

   - calculation of a mean speed of rotation ($\underline{N}$) by filtering of the instantaneous speed of rotation (N),
   - calculation of the difference between the instantaneous speed of rotation (N) and the mean speed of rotation ($\underline{N}$),
   - calculation of the mean difference ($\underline{N\text{-}N}$) between the instantaneous speed of rotation (N) and the mean speed of rotation ($\underline{N}$) by filtering of the difference (N-$\underline{N}$) between the instantaneous speed of rotation (N) and the mean speed of rotation ($\underline{N}$),
   - calculation of the difference between, on the one hand, the mean difference ($\underline{N\text{- }N}$) between the instantaneous speed of rotation (N) and the mean speed of rotation ($\underline{N}$) and, on the other hand, the difference (N-$\underline{N}$) between the instantaneous speed of rotation (N) and the mean speed of rotation ($\underline{N}$).

2. A method for correcting torque bumping as claimed in claim 1, characterised in that the filtering operations are carried out by first order low-pass filters (71, 73), with unitary gain and a variable time constant (t).

3. A method for correcting torque bumping as claimed in claim 2, characterised in that the time constant (t) of the filters (71, 73) is adjusted as a function of the values assumed by at least one characteristic parameter (N, Rp) of the operation of the engine (1).

4. A method for correcting torque bumping as claimed in any one of claims 1 to 3, characterised in that the value of the gain (G) is adjusted as a function of the values assumed by at least one characteristic parameter (N, Rp, Pcoll) of the operation of the engine (1).

5. A method for correcting torque bumping as claimed in any one of claims 1 to 4, characterised in that the control parameter corrected in response to the oscillations of the engine torque is the sparking advance (Av).

CPU

RAM

ROM

7

A/D

4

5

6

1

3

2

FIG.1

EP 0 655 554 B1

$$N \quad\longrightarrow\quad N+ \underbrace{\bigotimes}_{-} \quad\longrightarrow\quad N-\underline{N} + \underbrace{\bigotimes}_{-} \quad\longrightarrow\quad \boxed{\phantom{75}} \quad\longrightarrow$$

72     74     75

G

$$\boxed{\phantom{71}} \quad \underline{N}$$

71    τ

$$\boxed{\phantom{73}} \quad \underline{N-\underline{N}}$$

73    τ

<u>F.IG.2</u>